# EUROPEAN PATENT SPECIFICATION

(11) **EP 1 634 348 B1**
(45) Date of publication and mention of the grant of the patent: **21.02.2007**
(21) Application number: 05719970.5
(22) Date of filing: 25.02.2005
(51) Int. Cl.: H01M 8/06, B01J 8/02, B01J 8/04, B01J 19/24

(54) **REACTOR AND POWER GENERATOR**
REAKTOR UND STROMGENERATOR
REACTEUR ET GENERATEUR D'ENERGIE

(30) Priority: 26.02.2004 JP 2004051350; 26.02.2004 JP 2004051374
(43) Date of publication of application: 15.03.2006
(73) Proprietor: CASIO COMPUTER CO., LTD., Shibuya-ku, Tokyo 151-8543 (JP)
(72) Inventor: OGURA, Naotsugu, Fussa-shi Tokyo 197-0011 (JP); KAWAMURA, Yoshihiro, Fussa-shi Tokyo 197-0012 (JP); SHIOYA, Masaharu, Akiruno-shi Tokyo 197-0814 (JP)
(74) Representative: Grünecker, Kinkeldey, Stockmair & Schwanhäusser Anwaltssozietät
(86) International application number: PCT/JP2005/003696
(87) International publication number: WO 2005/083820

(56) References cited:
- EP-A- 0 430 184
- EP-A- 1 118 583
- DATABASE WPI Section Ch, Week 199642 Derwent Publications Ltd., London, GB; Class E36, AN 1996-421685 XP002337753 -& JP 08 208202 A (FUJI ELECTRIC CO LTD) 13 August 1996 (1996-08-13)
- PATENT ABSTRACTS OF JAPAN vol. 1999, no. 05, 31 May 1999 (1999-05-31) & JP 11 043305 A (TOYOTA MOTOR CORP), 16 February 1999 (1999-02-16)

## Description

The present invention relates to a reactor having a reactor main body with a channel structure, and a power generator equipped with the reactor.

Recently, researches and developments on fuel cells which ensure highly efficient energy usage have been made actively. Fuel cells which directly acquire electric energy from chemical energy through an electrochemical reaction of fuel with oxygen in the air are positioned as prospective and promising batteries. Hydrogen is one of fuels to be used in fuel cells, but care should be taken to handle and store hydrogen because hydrogen is gaseous at ordinary temperature. The use of liquid fuels, such as alcohols and gasoline, can make the system for storing a liquid fuel relatively compact. The use of a liquid fuel however requires a reformer which heats a liquid fuel and water vapor to a high temperature for reaction to produce hydrogen needed for power generation. When a fuel reforming type fuel cell is used as a power source for a small electronic equipment, a reformer as well as the fuel cell should be made compact.

Researches and developments have been made on the use of a chemical micro reactor as a reformer as described in Unexamined Japanese Patent Application KOKAI Publication No. 2002-102681 which discloses that a micro chemical reaction is caused by using a compact chemical micro reactor having a plurality of base plates connected together. The chemical micro reactor described in the publication will be discussed briefly. A first base plate of polystyrene on whose one surface a winding groove to be a channel is formed is prepared first. Then, a second base plate is adhered to the first base plate by ultraviolet-curing resin in such a way as to cover the groove, thereby forming a winding channel at the junction of the two base plates. A reactant is delivered to the winding channel of the chemical micro reactor by a pump or the like. As a reaction of the reactant is caused, a target product or an intermediate product is produced.

As the chemical micro reactor is heated, the heat of the chemical micro reactor is transferred to the reactant which flows through the channel and contacts the walls of the channel, causing a more efficient reaction of the reactant. When a catalyst is supported on the walls of the channel, the reactant which flows through the channel contacts the walls of the channel, causing the reaction of the reactant more efficiently. As a winding channel winds at plural locations, however, the flow direction of the fluid changes, increasing the pressure loss. This demands a large capacity for a fluid feeding mechanism, such as a pump.

If a reactant flows in the channel of a chemical micro reactor, the reaction of the reactant which produces a target product or an intermediate product is caused. When the reaction of a reactant is hard to occur at ordinary temperature, the chemical micro reactor should be heated. One way of heating a chemical micro reactor, which is also described in Japanese Patent Application KOKAI Publication No. 2002-102681, is to transfer heat in the base plate where the channel is formed by using an electric heater, such as a nichrome wire. This method however causes the temperature at the heater contacting portion of the base plate different from the temperature at the portion of the base plate which is not in contact with the heater or causes a temperature gradient in the depthwise direction of the groove to be the channel. This brings about a problem that the reaction temperature varies in the groove so that the reactant cannot react uniformly.

Fuel reforming of liquid fuel into gases is described in EP-A-1 118 583. A reaction vessel is separated into a partial oxidation reaction zone and a steam reforming zone. The two zones of the reaction vessel are separated by a perforated plate. The steam reforming zone includes a steam reforming catalyst. The fuel steams from the partial oxidation reaction zone into the steam reforming zone through the perforated plate.

Another fuel reforming is described in EP-A-0 430 184. A reaction vessel contains a plurality of reaction plates. One of the reaction plates is provided with a plurality of dispersion holes. The fuel streams from one area of the reaction vessel into another area through the dispersion holes.

JP-A-08 208 202 describes a fuel reformer. A reforming tube comprises a partition plate. This partition plate is made of metal and contains a plurality of through holes. The fuel streams through the holes of the partition plates from one layer to another.

It is the object of the present invention to provide an improved power generator

This is achieved by the features of the independent claims.

These objects and other objects and advantages of the present invention will become more apparent upon reading of the following detailed description and the accompanying drawings in which:
Fig. 1 is a block diagram of a power generator 1;
Fig. 2 is a perspective view of a carburetor 3, a reformer 5 and a CO (Carbon Oxide) selective oxidizer 6;
Fig. 3 is a cross-sectional view of the carburetor, the reformer and the CO selective oxidizer cut along the thicknesswise direction at line III-III in Fig. 2;
Fig. 4 is a plan view of a base plate 305;
Fig. 5 is a cross-sectional view of a carburetor 13, a reformer 15 and a CO selective oxidizer 16;
Fig. 6 is a perspective view of a reactor 20;
Fig. 7 is a cross-sectional view of the reactor cut along the thicknesswise direction of a reactor main body 21 at line VII-VII in Fig. 6;
Fig. 8 is a perspective view of a carburetor 3, a reformer 5 and a CO selective oxidizer 6;
Fig. 9 is a cross-sectional view of the carburetor, the reformer and the CO selective oxidizer cut along the thicknesswise direction at line IX-IX in Fig. 8;
Fig. 10 is a plan view of a carbon-based base plate 705;
Fig. 11 is a perspective view of a reactor 20; and
Fig. 12 is a cross-sectional view of the reactor cut along the thicknesswise direction of a reactor main body 21 at line XII-XII in Fig. 11.

The best mode of the invention will be described below with reference to the accompanying drawings.

### [First Embodiment]

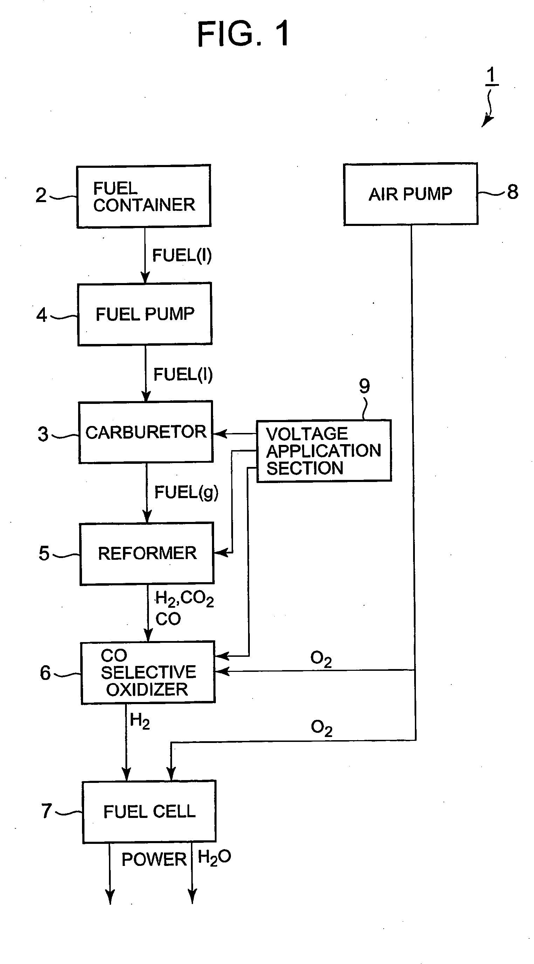

Fig. 1 is a block diagram of a power generator 1.

The power generator 1 is equipped in a desktop type personal computer, a notebook type personal computer, portable telephone, a PDA (Personal Digital Assistant), an electronic organizer, a wrist watch, a digital still camera, a digital video camera, a game device, a game machine, home appliances, and other electronic equipments, and is used as a power source for operating the main body of an electronic equipment.

The power generator 1 includes a fuel container 2, a carburetor 3, a fuel pump 4, a reformer 5, a CO (Carbon Oxide) selective oxidizer 6, a fuel cell 7, an air pump 8 and a voltage application section 9. The fuel container 2 retains a fuel to be the source for power generation. The carburetor 3 comprises a micro reactor which vaporizes a fuel supplied from the fuel container 2. The fuel pump 4 sucks the fuel from the fuel container 2 and feeds the sucked fuel to the carburetor 3. The reformer 5 comprises a micro reactor which reforms an air-fuel mixture supplied from the carburetor 3 to hydrogen. The CO selective oxidizer 6 comprises a micro reactor which removes carbon oxide from the air-fuel mixture supplied from the reformer 5. the fuel cell 7 generates electric energy through an electrochemical reaction of hydrogen in the air-fuel mixture supplied from the CO selective oxidizer 6 with oxygen in the air. The air pump 8 sucks outside air and supplies the air to the CO selective oxidizer 6 and the fuel cell 7. The voltage application section 9 applies a voltage to the carburetor 3, the reformer 5 and the CO selective oxidizer 6. The reactor according to the invention is adapted to the carburetor 3, the reformer 5 and the CO selective oxidizer 6.

The carburetor 3, the fuel pump 4, the reformer 5, the CO selective oxidizer 6, the fuel cell 7 and the air pump 8 are installed in the main body of the electronic equipment. The fuel container 2 is detachably provided at the main body of the electronic equipment, and when the fuel container 2 is attached to the main body of the electronic equipment, the fuel in the fuel container 2 is supplied to the carburetor 3 by the fuel pump 4.

The fuel retained in the fuel container 2 is a mixture of a liquid chemical fuel and water. Available chemical fuels are hydrogen-contained compounds, such as alcohols like methanol and ethanol, and gasoline. A mixture of methanol and water is used as a fuel in the embodiment

The fuel cell 7 has a fuel electrode as a gas diffusion layer, which comprises catalyst particles and support particles, an air electrode as a gas diffusion layer, which comprises catalyst particles and support particles, and a hydrogen-ion conductive solid polymer electrolyte film supported between the fuel electrode and the air electrode. The air electrode is connected to the air pump 8 via a pipe or the like, so that air is supplied to the air electrode.

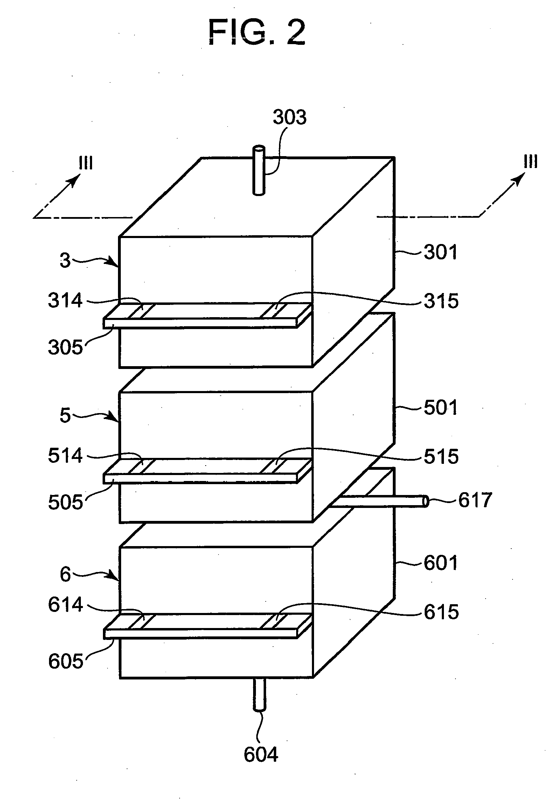

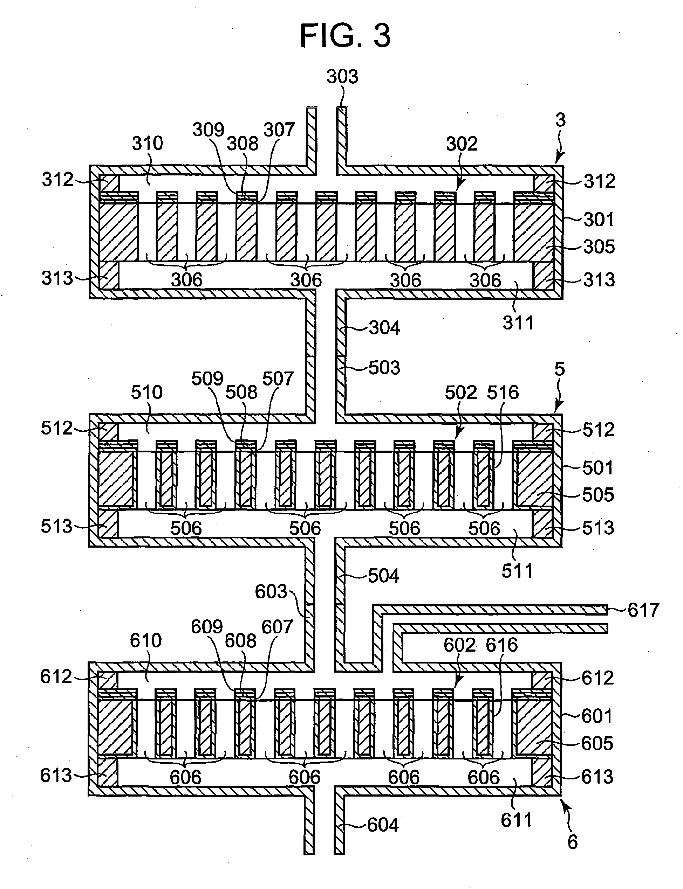

Fig. 2 is a perspective view of the carburetor 3, the reformer 5 and the CO selective oxidizer 6, and Fig. 3 is a cross-sectional view of the carburetor 3, the reformer 5 and the CO selective oxidizer 6 cut along the thicknesswise direction at line III-III in Fig. 2.

As shown in Figs. 2 and 3, the carburetor 3 has a reactor main body 301 which is a container having inner space formed therein, and a channel structure 302 retained in the reactor main body 301.

The reactor main body 301 is formed like a rectangular or cubic box having inner space. The reactor main body 301 is formed of a heat insulating material with a relatively low thermal conductivity, such as glass or ceramics. The reactor main body 301 is provided with an inflow pipe 303 and an outflow pipe 304 which communicates with the inner space and outside the reactor main body 301. The inflow pipe 303 is provided at a position facing the outflow pipe 304 in the reactor main body 301. In the embodiment, the inflow pipe 303 is provided at the top wall of the reactor main body 301, and the outflow pipe 304 at the bottom wall of the reactor main body 301. The inflow pipe 303 communicates with the fuel pump 4, and the outflow pipe 304 communicates with an inflow pipe 503 of the reformer 5, which will be discussed later.

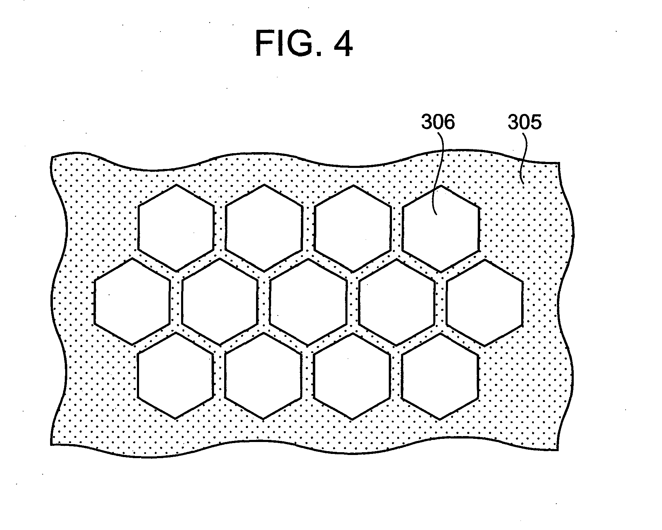

The channel structure 302 has, as a basic structure, a base plate 305 made of a metal which has a high thermal conductivity and whose top surface can be porous by anodization, such as aluminum (thermal conductivity of 237 W/m·K), cerium (thermal conductivity of 11.4 W/m·K), titanium (thermal conductivity of 21.9 W/m·K), or silicon (thermal conductivity of 148 W/m·K). The thickness of the base plate 305 is less than the length and width of the base plate 305 in the planar direction. The base plate 305 has a plurality of through holes 306 which penetrate the base plate 305 from one surface to the other and serve as a channel. The through holes 306 are formed in such a way as to be in parallel to one another along the lengthwise direction of the base plate 305 and to run straight so as not to wind halfway. Referring to Fig. 4 which is a plan view of a part of the base plate 305, the through holes 306 have hexagonal cross sections, and are laid out in a honeycomb pattern. The through holes 306 need not be formed hexagonal, but may take other forms, such as a triangle, a rectangle, a polygon greater than a rectangle, a circle or an oval. With the base plate 305 seen in a plan view, the through holes 306 need not be laid out in a honeycomb pattern, but may be laid out in a two-dimensional array (e.g., a matrix form). It is preferable that the base plate 305 should have a poor reactivity with respect to a substance contained in the fluid flowing in the through holes 306, a high thermal conductivity and a low coefficient of thermal expansion.

As shown in Fig. 3, an insulating film 307, such as a silicon oxide film (SiO₂) or a silicon nitride film (SiN), is formed between the through holes 306 on one side of the base plate 305 in the channel structure 302. An electric heating film 308 made of a metal oxide, such as Ta-Si-O-N, or a metal, such as Au, is formed on the insulating film 307. The electric heating film 308 is an electric resistive heat generator or a semiconductor heat generator, and generates heat with electric energy when a current flows in the electric heating film 308 or a voltage is applied thereto. The intervention of the insulating film 307 between the electric heating film 308 and the base plate 305 can avoid disabling of sufficient heating of the electric heating film 308 as a consequence of the current flowing to the base plate 305 with a lower resistance due to the voltage applied to the electric heating film 308. The intervention of the insulation film 307 also makes separation of the electric heating film 308 harder than that when the electric heating film 308 is formed directly on the base plate 305.

A protective insulating film 309, such as a silicon oxide film or a silicon nitride film, is formed on the electric heating film 308. Coated on the electric heating film 308, the protective insulating film 309 protects the electric heating film 308.

The base plate 305 is retained in the reactor main body 301, is supported away from the top wall of the reactor main body 301 by an upper support portion 312, and is supported away from the bottom wall of the reactor main body 301 by a lower support portion 313. The inner space of the reactor main body 301 is separated into an area 310 on that side of the inflow pipe 303 and an area 311 on that side of the outflow pipe 304 by the base plate 305. One surface of the base plate 305 faces the top wall of the reactor main body 301, while the other surface of the base plate 305 faces the bottom wall of the reactor main body 301, and the area 310 on the inflow pipe 303 side communicates with the area 311 on the outflow pipe 304 side by the through holes 306. Therefore, the through holes 306 serve as a channel from the area on the inflow pipe 303 side to the area on the outflow pipe 304 side.

As shown in Fig. 2, one of the four sides of the base plate 305 extends out of one side of the reactor main body 301. Two wires 314 and 315 formed integral with the electric heating film 308 are formed on the base plate 305 at that portion which is exposed from the reactor main body 301. The voltage application section 9 applies a voltage/current to the electric heating film 308 through the wires 314 and 315 to heat up the electric heating film 308 within a range of 80°C to 120°C.

The interface between the base plate 305 and the reactor main body 301 is sealed at that portion where the base plate 305 penetrates one side of the reactor main body 301.

As shown in Figs. 2 and 3, like the carburetor 3, the reformer 5 has a reactor main body 501 which is a container having inner space formed therein, and a channel structure 502 retained in the reactor main body 501. In Figs. 2 and 3, those portions of the reformer 5 which are substantially identical to corresponding portions of the carburetor 3, such as the insulating film 507 which is substantially identical to the insulating film 307, are given reference numerals in five hundreds whose lower two digits are the same as the lower two digits of the reference numerals of the corresponding portions of the carburetor 3. The descriptions of those portions of the reformer 5 which correspond to the substantially identical portions of the carburetor 3 will be omitted, and only the differences between the reformer 5 and the carburetor 3 will be described.

In the reformer 5, the inflow pipe 503 communicates with the outflow pipe 304 of the carburetor 3, and an outflow pipe 504 communicates with an inflow pipe 603 of the CO selective oxidizer 6.

In the reformer 5, a catalyst 516 as a reforming catalyst is formed on the entire surface layer of the base plate 505 excluding that portion which is covered with an electric heating film 508. In particular, the catalyst 516 is formed on the surface layer of the base plate 505. even in through holes 506. The catalyst 516 is what is acquired by oxidizing the surface layer of the base plate 505 to alter the surface layer to a porous metal oxide and supporting a catalyst component on the surface layer of the porous metal oxide as a support. The porous metal oxide is alumina (Al₂O₃) when the base plate 505 is of aluminum. When the base plate 505 is of titanium, the porous metal oxide is a titanium oxide. In the reformer 5, a Cu/ZnO-based catalyst is supported on the surface layer of the base plate 505 as a catalyst component. It is preferable that the base plate 505 should have an excellent corrosion resistance with respect to a substance contained in the fluid flowing in the through holes 506, should easily support the catalyst 516, and should have a high thermal conductivity and a low coefficient of thermal expansion. The thickness of the base plate 505 is less than the length and width of the base plate 505 in the planar direction. The plural through holes 506 are formed in such a way as to be in parallel to one another along the lengthwise direction of the base plate 505 and to run straight so as not to wind halfway. The voltage application section 9 applies a voltage/current to the electric heating film 508 through wires 514 and 515 to heat up the electric heating film 508 within a range of 200°C to 300°C.

As shown in Figs. 2 and 3, like the carburetor 3, the CO selective oxidizer 6 has a reactor main body 601 which is a container having inner space formed therein, and a channel structure 602 retained in the reactor main body 601. In Figs. 2 and 3, those portions of the CO selective oxidizer 6 which are substantially identical to corresponding portions of the carburetor 3, such as an insulating film 607 which is substantially identical to the insulating film 307, are given reference numerals in six hundreds whose lower two digits are the same as the lower two digits of the reference numerals of the corresponding portions of the carburetor 3. The descriptions of those portions of the CO selective oxidizer 6 which correspond to the substantially identical portions of the carburetor 3 will be omitted, and the differences between the CO selective oxidizer 6 and the carburetor 3 will be described.

In the CO selective oxidizer 6, the reactor main body 601 is provided with an air pipe 617 in addition to an inflow pipe 603 and an outflow pipe 604. The air pipe 617 faces an area 610 in the inner space of the reactor main body 601 which lies on the inflow pipe 603 side. The air pipe 617 communicates with the air pump 8. The inflow pipe 603 communicates with the outflow pipe 504 of the reformer 5, and the outflow pipe 604 communicates with the fuel electrode of the fuel cell 7.

In the CO selective oxidizer 6, a catalyst 616 as a catalyst for the oxidation reaction of the carbon oxide is formed on the entire surface layer of the base plate 605 (including the surface layer in the through holes 606) excluding that portion which is covered with an electric heating film 608. The catalyst 616 is what is acquired by oxidizing the surface layer of the base plate 605 to alter the surface layer to a porous metal oxide and supporting a catalyst component on the surface layer of the porous metal oxide as a support. In the CO selective oxidizer 6, a Pt-based catalyst is supported on the surface layer of the base plate 605 as a catalyst component It is preferable that the base plate 605 should have an excellent corrosion resistance with respect to a substance contained in the fluid flowing in the through holes 606, should easily support the catalyst 616, and should have a high thermal conductivity and a low coefficient of thermal expansion. The thickness of the base plate 605 is less than the length and width of the base plate 605 in the planar direction. The plural through holes 606 are formed in such a way as to be in parallel to one another along the lengthwise direction of the base plate 605 and to run straight so as not to wind halfway. The voltage application section 9 applies a voltage/current to the electric heating film 608 through wires 614 and 615 to heat up the electric heating film 608 within a range of 140°C to 190°C.

A method of manufacturing the carburetor 3, the reformer 5 and the CO selective oxidizer 6 will be described below.

First, using the photolithography technology, resist masks are formed on the flat base plates 305, 505 and 605 prepared. Next, the base plates 305, 505 and 605 with the resist mask thereon is etched. As a result, the through holes 306, 506, and 606 are formed in the associated base plates 305, 505 and 605.

Then, the insulating films 307, 507 and 607, the electric heating films 308, 508 and 608 (including the wires 314 and 315, 514 and 515, and 614 and 615), and the protective insulating films 309, 509 and 609 are formed on one surfaces of the associated base plates 305, 505 and 605 in the named order by vapor deposition, such as CVD, PVD or sputtering.

Then, with the base plates 505 and 605 serving as the anode, the cathode is immersed into an electrolyte, such as a phosphoric solution (preferable concentration of 4%) or an oxalic solution (preferable concentration of 5%), thereby oxidizing the surface layer of the base plate 505 or 605 (anodization). As the surface layers of the base plates 505 and 605 is anodized, the surface layers of the base plates 505 and 605 are altered to porous metal oxides (supports). This can allow each of the base plates 505 and 605 to have the capability of a support.

Next, catalyst components are supported on the surface layers of the base plates 505 and 605, forming the catalysts 516 and 616. As the surface layers of the base plates 505 and 605 are altered to porous metal oxides, the adhesion strength of the catalyst components can be improved.

Then, the base plates 305, 505 and 605 are retained in the associated reactor main bodies 301, 501 and 601 to separate the inner space of each of the reactor main bodies 301, 501 and 601 into the area 310, 510, 610 on that side of the inflow pipe 303, 503, 603 and the area 311, 511, 611 on that side of the outflow pipe 304, 504, 604. The area 310, 510, 610 on that side of the inflow pipe 303, 503, 603 is made to communicate with the area 311, 511, 611 on that side of the outflow pipe 304, 504, 604 by the through holes 306, 506, 606. A part of each of the base plates 305, 505 and 605, and the wires 314 and 315, 514 and 515, or 614 and 615 are made to extend out of the associated reactor main body 301, 501, or 601 to be connected to the voltage application section 9.

The action of the power generator 1 will be discussed.

A voltage/current is applied to each of the electric heating films 308, 508 and 608, the heat generated by the electric heating film 308, 508 or 608 is transferred to the base plate 305, 505, or 605, then to the catalyst 516 or 616 on the surface layer.

When the fuel pump 4 is activated, the fuel is supplied into the reactor main body 301 of the carburetor 3 from the fuel container 2. When the air pump 8 is activated, air is supplied to the area 610 in the reactor main body 601 through the air pipe 617 of the CO selective oxidizer 6 from outside.

In the carburetor 3, the fuel flows through the through holes 306 from the area 310 in the reactor main body 301 toward the area 311. At this time, the fuel is heated and vaporized. The formation of multiple through holes 306 in the base plate 305 increases the surface area of the base plate. Therefore, the contact area between the fuel and the base plate 305 is large, making vaporization of the fuel easier.

The vaporized fuel (the mixed gas of methanol and water) is supplied into the reactor main body 501 of the reformer 5, passing through the outflow pipe 304 and the inflow pipe 503. In the reformer 5, the fuel flows through the through holes 506 toward the area 511 from the area 510 in the reactor main body 501. In the reactor main body 501, the fuel contacts the catalyst 516 and is heated, producing hydrogen and carbon dioxide. Specifically, methanol reacts with vapor to produce carbon dioxide and hydrogen as expressed by a chemical formula 1 given below.

CH₃OH + H₂O → 3H₂ + Co₂ (1)

There may be a case where methanol and vapor are not completely reformed to a carbon dioxide and hydrogen in the reactor main body 501. In this case, methanol reacts with vapor to produce carbon dioxide and carbon oxide as expressed by the following chemical formula 2.

2CH₃OH + H₂O → 5H₂ + CO + CO₂ (2)

The mixed gas of the carbon oxide, the carbon dioxide and hydrogen or the like produced in the reformer 5 is supplied into the reactor main body of the CO selective oxidizer passing through the outflow pipe 504 and the inflow pipe 603. The outside air is supplied into the reactor main body 601, passing through the air pipe 617. Then, the mixed gas that has been supplied to the area 610 in the reactor main body 601 flows through the through holes 606 toward the area 611 from the area 610 in the reactor main body 601. In the reactor main body 601, a carbon oxide contained in the mixed gas supplied from the reformer 5 is selectively oxidized in the reactor main body 601 to remove the carbon oxide. Concretely, the carbon oxide specifically selected from the mixed gas supplied from the reformer 5 reacts with oxygen in the air, thereby producing a carbon dioxide as expressed by a chemical formula 3 given below.

2CO + O₂ → 2CO₂ (3)

Then, the mixed gas in the reactor main body 601 is supplied to the fuel electrode of the fuel cell 7 through the outflow pipe 604. At the fuel electrode of the fuel cell 7, the hydrogen gas in the supplied mixed gas is dissociated into hydrogen ions and electrons by the action of the catalyst particles of the fuel electrode, as expressed by the following electrochemical formula 4.

H₂→2H⁺ + 2e⁻ (4)

Of the mixed gas supplied to the fuel electrode of the fuel cell 7, that product which does not contribute to an electrochemical reaction (carbon dioxide or the like) is discharged outside.

Air is supplied to the air electrode of the fuel cell 7. As expressed by an electrochemical chemical formula 5, oxygen in the air and the hydrogen ions which has passed the solid polymer electrolyte film react with the electrons acquired from the fuel electrode, thus producing water as a product.

2H⁺ + 1/2O₂ + 2e⁻ → H₂O (5)

Of the air supplied to the air electrode of the fuel cell 7, that gas which does not contribute to an electrochemical reaction (nitrogen or the like) and the produced water are discharged outside.

In the power generator 1, as apparent from the above, the electrochemical chemical reactions expressed by the formulae 4 and 5 occur in the fuel cell 7, generating electric energy. The generated electric energy is used to activate the main body of the electronic equipment, the fuel pump 4 and the electric heating film 308,508,608.

According to the embodiment, as described above, the plural through holes 306, 506, 606 run through the associated base plate 305, 505, 605, the pressure loss of the fuel flowing in the through holes 306, 506, 606 becomes smaller. Particularly, as the channel formed by the through holes 306, 506, 606 does not wind, the fluid flows straight, making it possible to reduce the pressure loss.

As the through holes 506, 606 are formed in the associated base plate 505, 605, lots of catalyst components can be supported on the walls of the through holes 506, 606 for the total volume of the through holes 506, 606. This makes the contact area between the fuel and the catalyst 516, 616 greater, so that the reaction of the reactant by the catalyst 516, 616 occurs more efficiently.

As the cross-sectional area of each of the through holes 306, 506, 606 becomes smaller, the wall area of each through hole 306, 506, 606 of the reactor main body 301, 501, 601 can be increased by increasing the number of the through holes 306, 506, 606 penetrating the associated base plate 305, 505, 605, resulting in an efficient reaction of the fuel. Further, increasing the number of the through holes 306 506, 606 can increase the amount of the reactant that flows.

### [Second Embodiment]

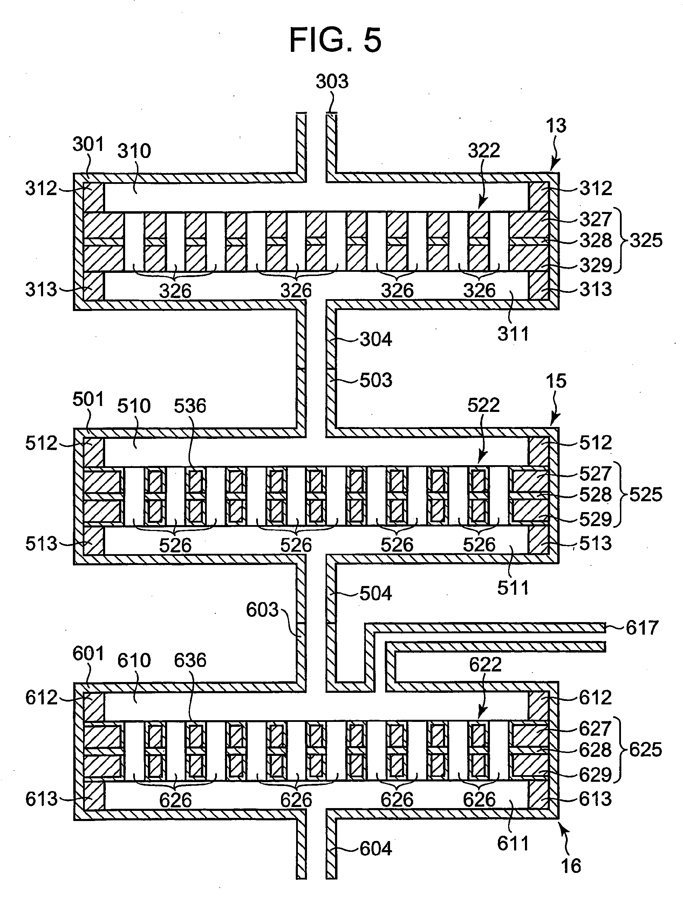

The second embodiment will be described referring to Fig. 5.

In a power generator according to the second embodiment, the carburetor 3, the reformer 5 and the CO selective oxidizer 6 of the power generator 1 according to the first embodiment are respectively changed to a carburetor 13, a reformer 15 and a CO selective oxidizer 16.

While the carburetor 3 includes the channel structure 302 having the base plate 305, and the reactor main body 301 in the first embodiment, the carburetor 13 includes a channel structure 322 having a base plate 325, and a reactor main body 301 in the second embodiment. Those portions of the carburetor 13 of the second embodiment in Fig. 5 which are substantially identical to corresponding portions of the carburetor 3 of the first embodiment are given the same reference numerals to avoid repeating redundant descriptions of those portions of the carburetor 13 which correspond to the substantially identical portions of the carburetor 3, and the differences between the carburetor 13 and the carburetor 3 will be described.

Although the base plate 305 in the carburetor 3 is a single metal plate, the base plate 325 in the carburetor 13 is a composite plate comprising two metal plates or thermal conductive plates 327 and 329 and an electric heating film 328 sandwiched between the thermal conductive plates 327 and 329. The electric heating film 328, like the electric heating film 308, is an electric resistive heat generator or a semiconductor heat generator of Ta-Si-O-N, Au or carbon. As the electric heating film 328 is held between the thermal conductive plates 327 and 329, an electric heating film, an insulating film and a protective insulating film are not formed on any outer surface of the base plate 325, so that the step of forming the insulating film and the protective insulating film can be eliminated at the time of forming the channel structure 322. Although the thermal conductive plates 327 and 329, like the base plate 305, are formed of a metal, such as aluminum, cerium, titanium or silicon, the type of the metal for the thermal conductive plate 327 may differ from the metal for the thermal conductive plate 329. The thermal conductive plate 327 faces the area 310 in the reactor main body 301, while the thermal conductive plate 329 faces the area 311. The plural through holes 326 likewise penetrate the base plate 325 from one surface to the other, and allow the area 310 to communicate with the area 311. A part of the base plate 325 extends out of the reactor main body 301, so that a current/voltage is externally applied to the electric heating film 328. The thickness of the base plate 325 is less than the length and width of the base plate 325 in the planar direction.

In the second embodiment, the reformer 15 includes a channel structure 522 having a base plate 525, and a reactor main body 501. Those portions of the reformer 15 of the second embodiment in Fig. 5 which are substantially identical to corresponding portions of the reformer 5 of the first embodiment are given the same reference numerals to avoid repeating redundant descriptions of those portions of the reformer 15 which correspond to the substantially identical portions of the reformer 5, and the differences between the reformer 15 and the reformer 5 will be described.

The base plate 525 in the reformer 15 is a composite plate comprising two metal plates or thermal conductive plates 527 and 529 and an electric heating film 528 sandwiched between the thermal conductive plates 527 and 529. The electric heating film 528, like the electric heating film 508, is an electric resistive heat generator or a semiconductor heat generator of Ta-Si-O-N, Au or carbon. As the electric heating film 528 is held between the thermal conductive plates 527 and 529, an electric heating film, an insulating film and a protective insulating film are not formed on any outer surface of the base plate 525. Although the thermal conductive plates 527 and 529, like the base plate 505, are formed of a metal, such as aluminum, cerium, titanium or silicon, the type of the metal for the thermal conductive plate 527 may differ from the metal for the thermal conductive plate 529. The thermal conductive plate 527 faces the area 510 in the reactor main body 501, while the thermal conductive plate 529 faces the area 511. The plural through holes 526 likewise penetrate the base plate 525 from one surface to the other, and allow the area 510 to communicate with the area 511. A catalyst 536 is formed on the entire surface layer of the base plate 525 including inside the through holes 526 (except for those portions of the through holes 526 from which the electric heating film 528 is exposed). The catalyst 536 is what is acquired by oxidizing the surface layers of the thermal conductive plates 527 and 529 to alter the surface layers to porous metal oxides and supporting a catalyst component (Cu/ZnO-based catalyst) on the surface layers of the porous metal oxides as supports. A part of the base plate 525 extends out of the reactor main body 501, so that a current/voltage is externally applied to the electric heating film 528. The thickness of the base plate 525 is less than the length and width of the base plate 525 in the planar direction.

In the second embodiment, the CO selective oxidizer 16 includes a channel structure 622 having a base plate 625, and a reactor main body 601. Those portions of the CO selective oxidizer 16 of the second embodiment in Fig. 5 which are substantially identical to corresponding portions of the CO selective oxidizer 6 of the first embodiment are given the same reference numerals to avoid repeating redundant descriptions of those portions of the CO selective oxidizer 16 which correspond to the substantially identical portions of the CO selective oxidizer 6, and the differences between the CO selective oxidizer 16 and the CO selective oxidizer 6 will be described.

The base plate 625 in the CO selective oxidizer 16 is a composite plate comprising two metal plates or thermal conductive plates 627 and 629 and an electric heating film 628 sandwiched between the thermal conductive plates 627 and 629. The electric heating film 628, like the electric heating film 608, is an electric resistive heat generator or a semiconductor heat generator of Ta-Si-O-N, Au or carbon. As the electric heating film 628 is held between the thermal conductive plates 627 and 629, an electric heating film, an insulating film and a protective insulating film are not formed on any outer surface of the base plate 625. Although the thermal conductive plates 627 and 629, like the base plate 605, are formed of a metal, such as aluminum, cerium, titanium or silicon, the type of the metal for the thermal conductive plate 627 may differ from the metal for the thermal conductive plate 629. The thermal conductive plate 627 faces the area 610 in the reactor main body 601, while the thermal conductive plate 629 faces the area 611. The plural through holes 626 likewise penetrate the base plate 625 from one surface to the other, and allow the area 610 to communicate with the area 611. A catalyst 636 is formed on the entire surface layer of the base plate 625 including inside the through holes 626 (except for those portions of the through holes 626 from which the electric heating film 628 is exposed). The catalyst 636 is what is acquired by oxidizing the surface layers of the thermal conductive plates 627 and 629 to alter the surface layers to porous metal oxides and supporting a catalyst component (Pt-based catalyst) on the surface layers of the porous metal oxides as supports. A part of the base plate 625 extends out of the reactor main body 601, so that a current/voltage is externally applied to the electric heating film 628. The thickness of the base plate 625 is less than the length and width of the base plate 625 in the planar direction.

At the time of fabricating the carburetor 13, the reformer 15 and the CO selective oxidizer 16, the base plates 325, 525 and 625 are prepared and through holes 326, 526 and 626 are respectively formed in the base plates 325, 525 and 625 by the photolithography technology. Then, the surface layers of the base plates 525 and 625 are altered to porous metal oxides by anodization, and catalyst components are supported on the surface layers of the base plates 525 and 625. The base plates 325, 525 and 625 are retained in the associated reactor main bodies 301, 501 and 601.

In the carburetor 13, the reformer 15 and the CO selective oxidizer 16, the electric heating films 328, 528 and 628 generate heat with the electricity, heating the base plates 325, 525 and 625 and thus heating the catalysts 536 and 636. As the fuel pump 4 is activated, the fuel flows through the carburetor 13, the reformer 15, the CO selective oxidizer 16 and the fuel cell 7 in the named order. In the carburetor 13, the fuel flows toward the area 311 from the area 310 through the through holes 326, and is further heated to be vaporized. In the reformer 15, the vaporized fuel flows toward the area 511 from the area 510 through the through holes 526, and hydrogen and a carbon dioxide or the like are produced from the fuel. In the CO selective oxidizer 16, the mixed gas produced in the reformer 15 flows toward the area 611 from the area 610 through the through holes 626, and a carbon oxide is removed by oxidization.

As the plural through holes 326, 526 and 626 penetrate the associated base plates 325, 525 and 625 in the embodiment, the pressure loss of the fuel flowing in the through holes 326, 526 and 626 becomes smaller. As the through holes 326, 526 and 626 do not wind, particularly, the pressure loss can be made smaller.

As each of the electric heating films 328, 528 and 628 is held between the associated thermal conductive plates, a catalyst component can be supported on most of the surface layer of the base plate 325, 525 or 625.

### [Third Embodiment]

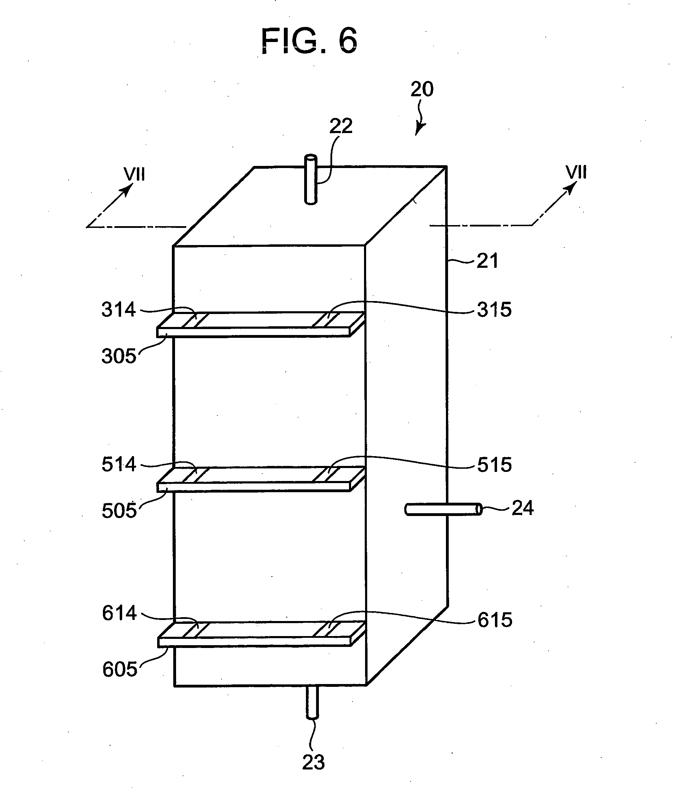

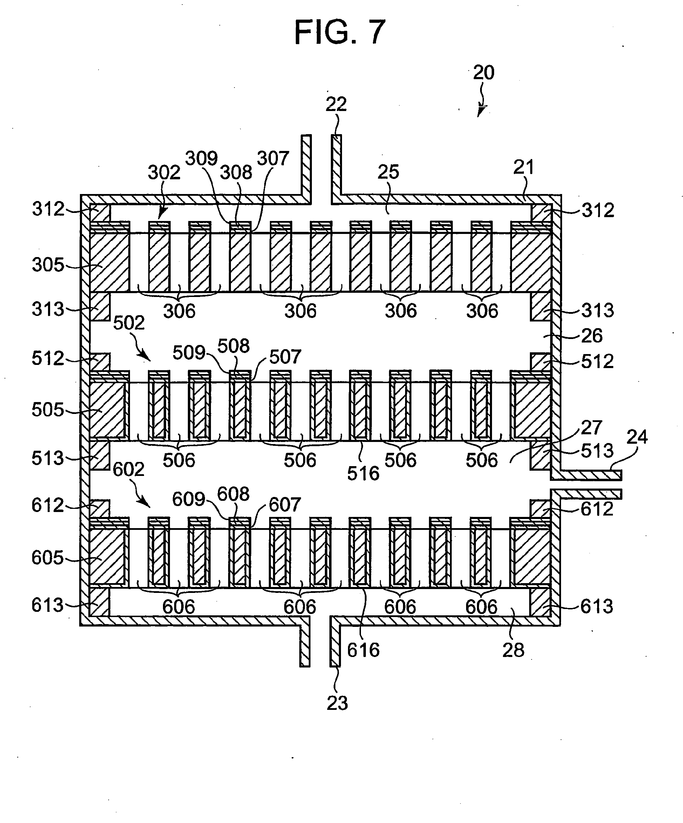

Although the channel structures 302, 502 and 602 are retained in the separate reactor main bodies 301, 501 and 601 in the first embodiment, the channel structures 302, 502 and 602 are retained in a same reactor main body 21 in the third embodiment, as shown in Figs. 6 and 7. Fig. 6 is a perspective view of a reactor 20 having the carburetor, the reformer and the CO selective oxidizer integrated, and Fig. 7 is a cross-sectional view of the reactor 20 cut along the thicknesswise direction of the reactor main body 21 at line VII-VII in Fig. 6. The reactor 20 shown in Figs. 6 and 7, which replaces all of the carburetor 3, the reformer 5 and the CO selective oxidizer 6 shown in Fig. 1, is used in the power generator 1.

The reactor main body 21 has inner space formed therein. The reactor main body 21 is provided with an inflow pipe 22, an outflow pipe 23 and an air pipe 24 which extend out of the reactor main body 1 from the inner space. The inflow pipe 22 is provided at the top wall of the reactor main body 21, the outflow pipe 23 is provided at the bottom wall which faces the inflow pipe 22, and the air pipe 24 is provided at a side wall of the reactor main body 21. The inflow pipe 22 communicates with the fuel pump 4, the outflow pipe 23 communicates with the fuel electrode of the fuel cell 7, and the air pipe 24 communicates with the air pump 8.

Channel structures 302, 502 and 602 shown in Figs. 6 and 7 are the same as those of the first embodiment, respectively. Those portions in Figs. 6 and 7 which are the same as the corresponding portions of the channel structures 302, 502 and 602 of the first embodiment are given the same reference numerals to avoid repeating redundant descriptions of the individual portions of the channel structures 302, 502 and 602 shown in Figs. 6 and 7.

In the reactor main body 21, the base plate 305 of the channel structure 302, the base plate 505 of the channel structure 502 and the base plate 605 of the channel structure 602 are laid in the named order from the inflow pipe 22 toward the outflow pipe 23. One surface of the base plate 305 faces the inflow pipe 22, the other surface of the base plate 605 faces the outflow pipe 23, and the base plates 305, 505 and 605 face one another in parallel to one another. The base plate 305 separates the inner space of the reactor main body 21 into an area 25 on the inflow pipe 22 side and an area 26 between the base plate 305 and the base plate 505, the base plate 505 separates the inner space of the reactor main body 21 into the area 26 and an area 27 between the base plate 505 and the base plate 605, and the base plate 605 separates the inner space of the reactor main body 21 into the area 27 and an area 28 on the outflow pipe 23 side. The air pipe 24 faces the area 27 between the base plate 505 and the base plate 605.

Apart of each of the base plates 305, 505 and 605 extends outside the reactor main body 21, and the wires 314 and 315, 514 and 515, or 614 and 615 are formed at those portions which are exposed from the reactor main body 21. The wires 314 and 315 are formed integral with the electric heating film 308 on the base plate 305, the wires 514 and 515 are formed integral with the electric heating film 508 on the base plate 505, and the wires 614 and 615 are formed integral with the electric heating film 608 on the base plate 605.

In the reactor 20, the electric heating films 328, 528 and 628 generate heat with the electricity, heating the base plates 305, 505 and 605 and thus heating the catalysts 516 and 616. As the fuel pump 4 is activated, the fuel is supplied into the reactor main body 21 from the inflow pipe 22. When the fuel flows toward the area 26 from the area 25 through the through holes 306, the fuel is heated and vaporized. When the vaporized fuel flows toward the area 27 from the area 26 through the through holes 506, hydrogen and a carbon dioxide or the like are produced from the fuel. When the produced mixed gas flows toward the area 28 from the area 27 through the through holes 606, a carbon oxide in the mixture is removed by oxidization.

As the plural through holes 306, 506 and 606 penetrate the associated base plates 305, 505 and 605 in the embodiment, the pressure loss of the fuel flowing in the through holes 306, 506 and 606 becomes smaller. As the through holes 306, 506 and 606 do not wind, particularly, the pressure loss can be reduced.

Although each of the electric heating films 308, 508 and 608 is formed on one surface of the associated one of the base plates 305, 505 and 605 in the embodiments, for example, the electric heating film may be formed on the other surface or may be formed on both surfaces. In the third embodiment, the base plates 325, 525 and 625 of the second embodiment can be used in place of the base plates 305, 505 and 605.

Although the fuel pump 4 is the mechanism to feed the liquid fuel to the carburetor 3, the carburetor 13 and the reactor 20 in the embodiments, the fuel may be supplied as droplets to the carburetor 3, the carburetor 13 and the reactor 20 by the heads (droplet discharge heads) of an ink jet printer. For the carburetor 3, for example, a plurality of droplet discharge heads may be laid out at the inner surface of the top wall of the reactor main body 301 in such a way as to face the through holes 306, so that the droplet discharge heads inject the fuel as droplets toward the through holes 306 to supply the fuel to the carburetor 3.

Although the base plates 305, 505 and 605 are etched using resist masks by the photolithography technology, the through holes 306, 506, and 606 may be formed by sand blasting using metal masks.

### [Fourth Embodiment]

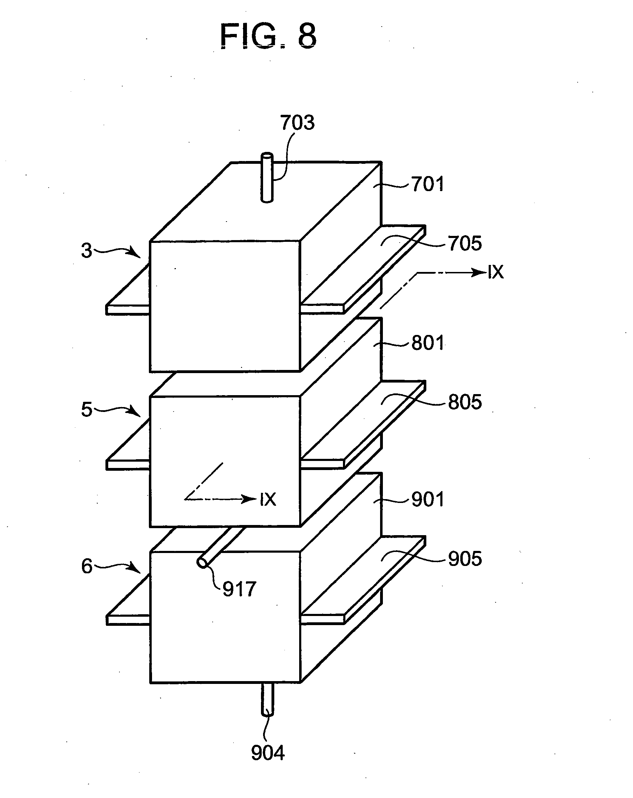

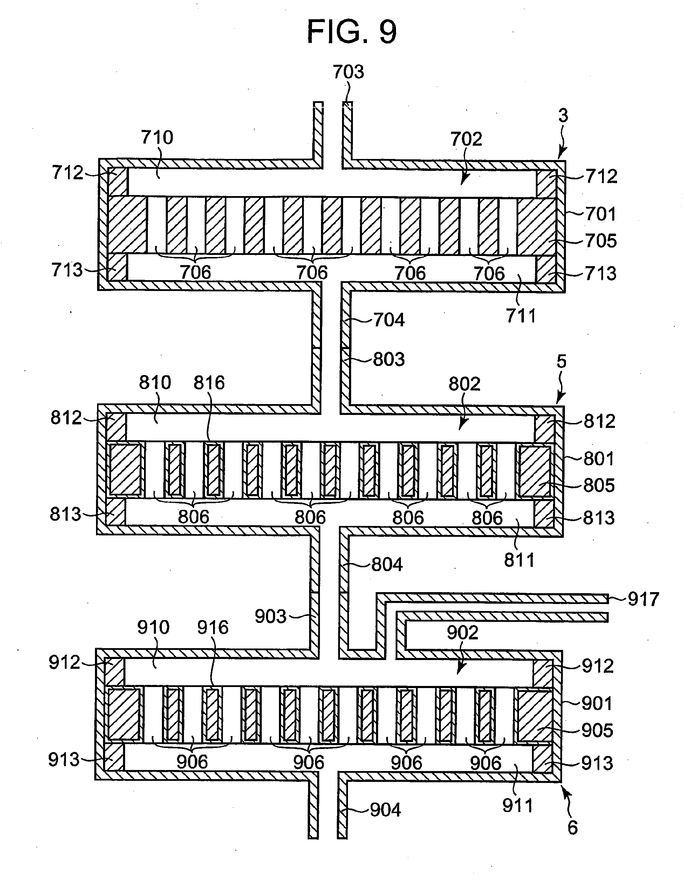

Fig. 8 is a perspective view of the carburetor 3, the reformer 5 and the CO selective oxidizer 6, and Fig. 9 is a cross-sectional view of the carburetor 3, the reformer 5 and the CO selective oxidizer 6 cut along the thicknesswise direction at line IX-IX in Fig. 8.

As shown in Figs. 8 and 9, the carburetor 3 has a reactor main body 701 which is a container having inner space formed therein, and a channel structure 702 retained in the reactor main body 701.

The reactor main body 701 is formed like a rectangular or cubic box having inner space. The reactor main body 701 is formed of a heat insulating material with a relatively low thermal conductivity, such as glass or ceramics. The reactor main body 701 is provided with an inflow pipe 703 and an outflow pipe 704 which communicates with the inner space and outside the reactor main body 701. The inflow pipe 703 is provided at a position facing the outflow pipe 704 in the reactor main body 701. In the embodiment, the inflow pipe 703 is provided at the top wall of the reactor main body 701, and the outflow pipe 704 at the bottom wall of the reactor main body 701. The inflow pipe 703 communicates with the fuel pump 4, and the outflow pipe 704 communicates with an inflow pipe 503 of the reformer 5, which will be discussed later.

The channel structure 702 has, as a basic structure, a carbon-based base plate 705 containing either a conductive graphite or a porous activated carbon. The carbon-based base plate 705 is an electric heat generating resistor which has a conductivity with the adequate resistivity and generates heat when applied with a current/voltage by the voltage application section 9. The carbon-based base plate 705 has a poor reactivity with respect to a substance contained in the fluid flowing in the through holes 706, and an extremely high thermal conductivity, making it easier to ensure a uniform temperature over the entire surface of the base plate, and has a low coefficient of thermal expansion so that the catalyst, if heated, is hard to be separated. The thickness of the carbon-based base plate 705 is less than the length and width of the carbon-based base plate 705 in the planar direction.

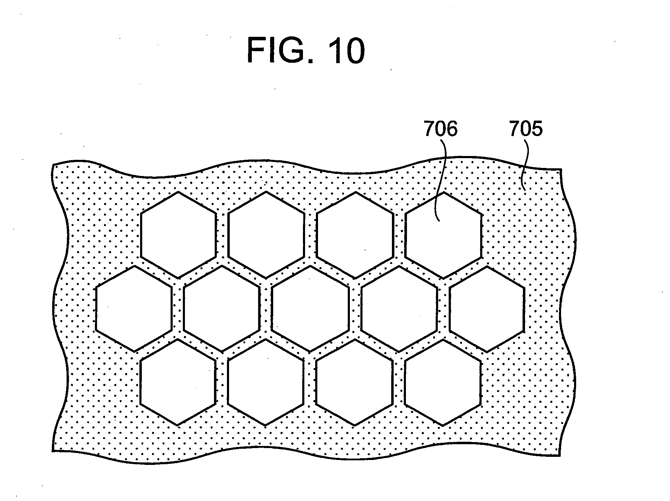

A plurality of through holes 706 which penetrate the carbon-based base plate 705 from one surface to the other and serve as a channel are formed at the carbon-based base plate 705 in such a way as to be in parallel to one another along the lengthwise direction of the carbon-based base plate 705 and to run straight so as not to wind halfway. Referring to Fig. 10 which is a plan view of a part of the carbon-based base plate 705, the through holes 706 have hexagonal cross sections, and are laid out in a honeycomb pattern. The through holes 706 need not be formed hexagonal, but may take other forms, such as a triangle, a rectangle, a polygon greater than a rectangle, a circle or an oval. With the carbon-based base plate 705 seen in a plan view, the through holes 706 need not be laid out in a honeycomb pattern, but may be laid out in a two-dimensional array (e.g., a matrix form).

A metal oxide film which is not concerned with the reaction of the fuel may be formed as a protection film at the top surface of a part of the carbon-based base plate 705.

The carbon-based base plate 705 is retained in the reactor main body 701, is supported away from the top wall of the reactor main body 701 by an upper support portion 712, and is supported away from the bottom wall of the reactor main body 701 by a lower support portion 713. The inner space of the reactor main body 701 is separated into an area 710 on that side of the inflow pipe 703 and an area 711 on that side of the outflow pipe 704 by the carbon-based base plate 705. One surface of the carbon-based base plate 705 faces the top wall of the reactor main body 701, while the other surface of the carbon-based base plate 705 faces the bottom wall of the reactor main body 701, and the area 710 on the inflow pipe 703 side communicates with the area 711 on the outflow pipe 704 side by the through holes 706. Therefore, the through holes 706 serve as a channel from the area on the inflow pipe 703 side to the area on the outflow pipe 704 side.

As shown in Fig. 8, opposing two of the four sides of the carbon-based base plate 705 respectively extend out of opposing two sides of the reactor main body 701. A voltage is applied between the extending two sides by the voltage application section 9, causing the carbon-based base plate 705 to electrically generate heat. The interface between the carbon-based base plate 705 and the reactor main body 701 is sealed at that portion where the carbon-based base plate 705 penetrates the reactor main body 701.

When a metal oxide film is formed on the top surface of the carbon-based base plate 705, it is preferable that the metal oxide film should be separated outside the reactor main body 701 to expose the top surface of the carbon-based base plate 705.

As shown in Figs. 8 and 9, like the carburetor 3, the reformer 5 has a reactor main body 801 which is a container having inner space formed therein, and a channel structure 802 retained in the reactor main body 801. In Figs. 8 and 9, those portions of the reformer 5 which are substantially identical to corresponding portions of the carburetor 3, such as the reactor main body 801 which is substantially identical to the reactor main body 701, are given reference numerals in five hundreds whose lower two digits are the same as the lower two digits of the reference numerals of the corresponding portions of the carburetor 3. The descriptions of those portions of the reformer 5 which correspond to the substantially identical portions of the carburetor 3 will be omitted, and the differences between the reformer 5 and the carburetor 3 will be described.

In the reformer 5, the inflow pipe 803 communicates with the outflow pipe 704 of the carburetor 3, and an outflow pipe 804 communicates with an inflow pipe 903 of the CO selective oxidizer 6.

A carbon-based base plate 805 is retained in the reactor main body 801, is supported away from the top wall of the reactor main body 801 by an upper support portion 812, and is supported away from the bottom wall of the reactor main body 801 by a lower support portion 813. In the reformer 5, the entire surface layer of the carbon-based base plate 805 is a porous film on which a catalyst 816 is supported. Accordingly, the catalyst 816 is formed on the surface layer of the carbon-based base plate 805 even in the through holes 806. The catalyst 816 is a catalyst component supported on the surface layer of the carbon-based base plate 805 with the surface layer serving as a support. In the reformer 5, a Cu/ZnO-based catalyst is supported as a catalyst component on the surface layer of the carbon-based base plate 805.

The catalyst 816 may not be supported with the surface layer of the carbon-based base plate 805 serving as a support. For example, the catalyst 816 may be a catalyst component supported on a porous metal oxide (of, for example, alumina (Al₂O₃), titanium oxide or cerium oxide) formed as a support on the surface layer of the carbon-based base plate 805. The porous metal oxide may be a metal oxide which is not involved in the reaction of the fuel (see the aforementioned chemical formula 1), or a metal oxide effective in the reaction of the fuel. The thickness of the carbon-based base plate 805 is less than the length and width of the carbon-based base plate 805 in the planar direction. The through holes 806 are formed at the carbon-based base plate 805 in such a way as to be in parallel to one another along the lengthwise direction of the carbon-based base plate 805 and to run straight so as not to wind halfway.

As shown in Figs. 8 and 9, like the carburetor 3, the CO selective oxidizer 6 has a reactor main body 901 which is a container having inner space formed therein, and a channel structure 902 retained in the reactor main body 901. In Figs. 8 and 9, those portions of the CO selective oxidizer 6 which are substantially identical to corresponding portions of the carburetor 3, such as an insulating film 907 which is substantially identical to the insulating film 707, are given reference numerals in six hundreds whose lower two digits are the same as the lower two digits of the reference numerals of the corresponding portions of the carburetor 3 to avoid repeating redundant descriptions of those portions of the CO selective oxidizer 6 which correspond to the substantially identical portions of the carburetor 3. The following will discuss the differences between the CO selective oxidizer 6 and the carburetor 3.

In the CO selective oxidizer 6, the reactor main body 901 is provided with an air pipe 917 in addition to an inflow pipe 903 and an outflow pipe 904. The air pipe 917 faces an area 910 in the inner space of the reactor main body 901 which lies on the inflow pipe 903 side. The air pipe 917 communicates with the air pump 8. The inflow pipe 903 communicates with the outflow pipe 804 of the reformer 5, and the outflow pipe 904 communicates with the fuel electrode of the fuel cell 7.

A carbon-based base plate 905 is retained in the reactor main body 901, is supported, away from the top wall of the reactor main body 901, by an upper support portion 912, and is supported, away from the bottom wall of the reactor main body 901, by a lower support portion 913.

In the CO selective oxidizer 6, a catalyst 916 is formed on the entire porous surface layer of the carbon-based base plate 905 (including the surface layer inside through holes 906). The catalyst 916, which is for the oxidization reaction of a carbon oxide, is a catalyst component supported on a porous film on the surface layer of the carbon-based base plate 905 with the porous film serving as a support. In the CO selective oxidizer 6, a Pt-based catalyst is supported as a catalyst component on the porous film of the carbon-based base plate 905.

The catalyst 916 may not be supported with the surface layer of the carbon-based base plate 905 serving as a support. For example, the catalyst 916 may be a catalyst component supported on a porous metal oxide (of, for example, alumina (Al₂O₃), titanium oxide or cerium oxide) formed as a support on the surface layer of the carbon-based base plate 905. The porous metal oxide may be a metal oxide which is not involved in the oxidization of a carbon oxide, or a metal oxide effective in the reaction of the fuel. When the catalyst 916 is supported on the porous metal oxide film serving as a support, it is preferable that the metal oxide film should be separated outside the reactor main body 901 to expose the top surface of the carbon-based base plate 905. The thickness of the carbon-based base plate 905 is less than the length and width of the carbon-based base plate 905 in the planar direction. The through holes 906 are formed at the carbon-based base plate 905 in such a way as to be in parallel to one another along the lengthwise direction of the carbon-based base plate 905 and to run straight so as not to wind halfway.

A method of manufacturing the carburetor 3, the reformer 5 and the CO selective oxidizer 6 will be described below.

First, flat carbon-based base plates 705, 805 and 905 which show a conductivity high enough to serve as a heat generating resistor having a porous surface layer, and a high resistivity are prepared, metal masks are formed on the carbon-based base plates 705, 805 and 905, which are in turn etched with the metal masks thereon. As a result, plural through holes 706, 806 and 906 are respectively formed in the carbon-based base plates 705, 805 and 905. The through holes 706, 806 and 906 may be formed in the carbon-based base plates 705, 805 and 905 by locally blasting microparticles to the top surfaces of the carbon-based base plates 705, 805 and 905 (sand blasting).

Next; the catalysts 816 and 916 are formed by supporting components on the porous surface layers of the base plates 805 and 905 (including the porous surface layers inside the through holes 806 and 906). The method of supporting the catalyst components on the surface layers of the carbon-based base plates 805 and 905 may be the impregnation method or the dipping method (which coats a catalyst slurry solution on the carbon-based base plates 805 and 905).

When the surface layers of the carbon-based base plates 805 and 905 do not serve as supports, the catalysts 816 and 916 are formed by forming (coating) porous metal oxide films on the surface layers of the carbon-based base plates 805 and 905 (including the surfaces in the through holes 806 and 906) by the sol-gel method, the dip coating method or the like, and supporting catalyst components on the porous metal oxide films.

Then, the carbon-based base plates 705, 805 and 905 are retained in the associated reactor main bodies 701, 801 and 901 to separate the inner space of each of the reactor main bodies 701, 801 and 901 into the area 710, 810, 910 on that side of the inflow pipe 703, 803, 903 and the area 711, 811, 911 on that side of the outflow pipe 704, 804, 904. The area 710, 810,910 on that side of the inflow pipe 703, 803, 903 is made to communicate with the area 711, 811, 911 on that side of the outflow pipe 704, 804, 904 by the through holes 706, 806, 906, and two opposing sides of each of the carbon-based base plates 705, 805 and 905 are made to extend out of the associated one of the reactor main bodies 701, 801 and 901.

The action of the power generator 1 will be discussed.

When a voltage/current is applied to each of the carbon-based base plates 705, 805 and 905 by the voltage application section 9, the carbon-based base plates 705, 805 and 905 generate heat, thus heating up the catalysts 816 and 916.

When the fuel pump 4 is activated, the fuel is supplied into the reactor main body 701 of the carburetor 3 from the fuel container 2. When the air pump 8 is activated, air is supplied to the area 910 in the reactor main body 901 through the air pipe 917 of the CO selective oxidizer 6 from outside.

In the carburetor 3, the fuel flows through the through holes 706 from the area 710 in the reactor main body 701 toward the area 711. While the fuel is flowing through the through holes 706, the fuel contacts the top surface of the carbon-based base plate 705 and is thus heated and vaporized. Because the formation of multiple through holes 706 in the carbon-based base plate 705 increases the surface area of the carbon-based base plate 705, the contact area between the fuel and the carbon-based base plate 705 is large, making vaporization of the fuel easier.

The vaporized fuel (the mixture of methanol and water) is supplied into the reactor main body 801 of the reformer 5, passing through the outflow pipe 704 and the inflow pipe 803. In the reformer 5, the fuel flows through the through holes 806 toward the area 811 from the area 810 in the reactor main body 801. In the reactor main body 801, the fuel contacts the catalyst 816 and is heated, producing hydrogen and carbon dioxide. Specifically, methanol reacts with vapor to produce carbon dioxide and hydrogen as expressed by the chemical formula 1.

There may be a case where methanol and vapor are not completely reformed to a carbon dioxide and hydrogen in the reactor main body 801. In this case, methanol reacts with vapor to produce carbon dioxide and carbon oxide as expressed by the chemical formula 2.

The mixed gas of the carbon oxide, the carbon dioxide and hydrogen or the like produced in the reformer 5 is supplied into the reactor main body of the CO selective oxidizer passing through the outflow pipe 804 and the inflow pipe 903. The outside air is supplied into the reactor main body 901, passing through the air pipe 917. Then, the mixed gas that has been supplied to the area 910 in the reactor main body 901 flows through the through holes 906 toward the area 911 from the area 910 in the reactor main body 901. In the reactor main body 901, a carbon oxide contained in the mixed gas supplied from the reformer 5 is selectively oxidized in the reactor main body 901 to remove the carbon oxide. Concretely, the carbon oxide specifically selected from the mixed gas supplied from the reformer 5 reacts with oxygen in the air, thereby producing a carbon dioxide as expressed by the chemical formula 3.

Then, the mixed gas in the reactor main body 901 is supplied to the fuel electrode of the fuel cell 7, passing through the outflow pipe 904. At the fuel electrode of the fuel cell 7, the hydrogen gas in the supplied mixed gas is separated into hydrogen ions and electrons by the action of the catalyst particles of the fuel electrode, as expressed by the electrochemical formula 4.

Of the mixed gas supplied to the fuel electrode of the fuel cell 7, that product which does not contribute to an electrochemical reaction (carbon dioxide or the like) is discharged outside.

Air is supplied to the air electrode of the fuel cell 7. As expressed by the electrochemical chemical formula 5, oxygen in the air and the hydrogen ions which has passed the solid polymer electrolyte film react with the electrons acquired from the fuel electrode, thus producing water as a product.

Of the air supplied to the air electrode of the fuel cell 7, that gas which does not contribute to an electrochemical reaction (nitrogen or the like) and the produced water are discharged outside.

In the power generator 1, the electrochemical chemical reactions expressed by the formulae 4 and 5 occur in the fuel cell 7, generating electric energy. The generated electric energy is used to activate the main body of the electronic equipment and the fuel pump 4.

As the conductive carbon-based base plates 705, 805 and 905 are used as supports to support the catalysts in the embodiment, the carbon-based base plates 705, 805 and 905 self-generate heat with the current/voltage applied. This eliminates the need for separate heaters, electric heating films or the like in the reactor main bodies 701, 801 and 901, thus simplifying the structures of the carburetor 3, the reformer 5 and the CO selective oxidizer 6.

As the fuel directly contacts the carbon-based base plates 705, 805 and 905 which self-generate heat, the temperatures at the top surfaces of the base plates can be made uniform, ensuring an efficient and uniform fuel reaction.

As the plural through holes 706, 806, 906 run through the associated carbon-based base plate 705, 805, 905, the pressure loss of the fuel flowing in the through holes 706, 806, 906 becomes smaller. Because the channel formed by the through holes 706, 806, 906 does not wind, particularly, the fluid flows straight, making it possible to reduce the pressure loss.

As the plural through holes 806, 906 are formed in the associated base plate 805, 905, lots of catalyst components can be supported on the walls of the through holes 806, 906 for the total volume of the through holes 806, 906. This makes the contact area between the fuel and the catalyst 516, 616 greater, so that the reaction of the reactant by the catalyst 516, 616 occurs more efficiently. Further, as the through holes 806, 906 run straight, the pressure loss in the through holes 806, 906 can be suppressed even when the amounts of the catalyst components supported become larger.

As the cross-sectional area of each of the through holes 706, 806, 906 becomes smaller, the wall area of each through hole 706, 806, 906 of the reactor main body 701, 801, 901 is increased by increasing the number of the through holes 706, 806, 906 penetrating the associated carbon-based base plate 705, 805, 905, resulting in an efficient reaction of the fuel. Further, increasing the number of the through holes 706 806, 906 can increase the amount of the reactant that flows.

### [Fifth Embodiment]

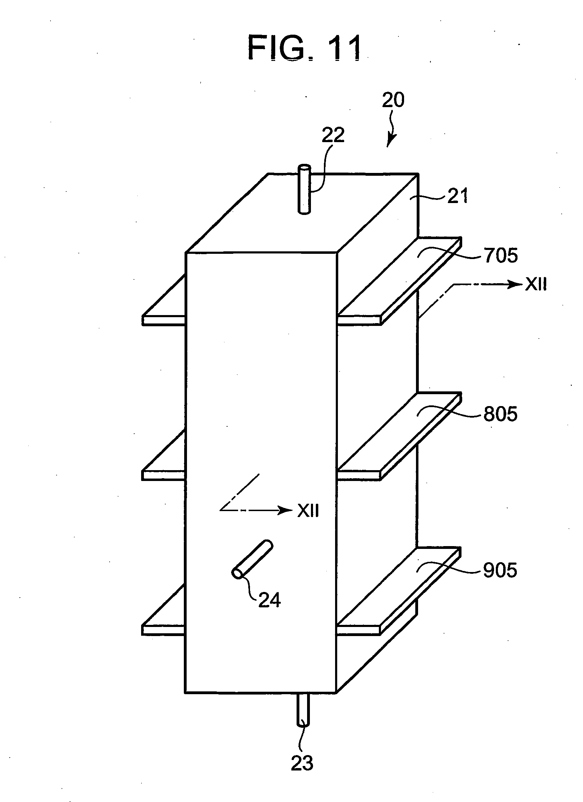

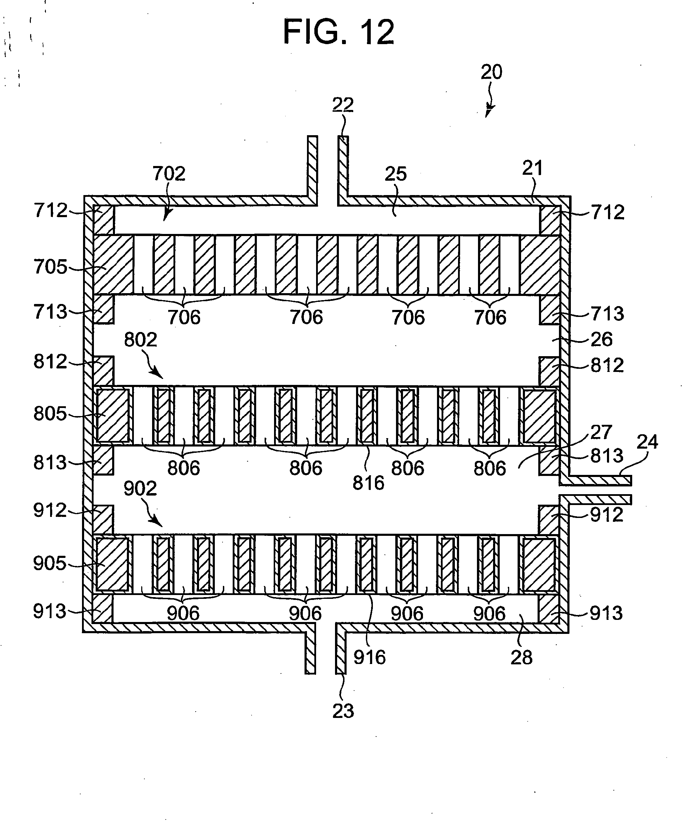

Although the channel structures 702, 802 and 902 are retained in the separate reactor main bodies 701, 801 and 901 in the fourth embodiment, the channel structures 702, 802 and 902 are retained in a same reactor main body 21 in the fifth embodiment, as shown in Figs. 11 and 12. Fig. 11 is a perspective view of a reactor 20 having the carburetor, the reformer and the CO selective oxidizer integrated, and Fig. 12 is a cross-sectional view of the reactor 20 cut along the thicknesswise direction of the reactor main body 21 at line XII-XII in Fig. 11. The reactor 20 shown in Figs. 11 and 12, which replaces all of the carburetor 3, the reformer 5 and the CO selective oxidizer 6 shown in Fig. 1, is used in the power generator 1.

The reactor main body 21 has inner space formed therein. The reactor main body 21 is provided with an inflow pipe 22, an outflow pipe 23 and an air pipe 24 which extend out of the reactor main body 1 from the inner space. The inflow pipe 22 is provided at the top wall of the reactor main body 21, the outflow pipe 23 is provided at the bottom wall which faces the inflow pipe 22, and the air pipe 24 is provided at a side wall of the reactor main body 21. The inflow pipe 22 communicates with the fuel pump 4, the outflow pipe 23 communicates with the fuel electrode of the fuel cell 7, anti the air pipe 24 communicates with the air pump 8.

Channel structures 702, 802 and 902 shown in Figs. 11 and 12 are the same as those of the fourth embodiment, respectively. Those portions in Figs.11 and 12 which are the same as the corresponding portions of the channel structures 702, 802 and 902 of the fourth embodiment are given the same reference numerals to avoid repeating redundant descriptions of the individual portions of the channel structures 702, 802 and 902 shown in Figs. 11 and 12.

In the reactor main body 21, the carbon-based base plate 705 of the channel structure 702, the carbon-based base plate 805 of the channel structure 802 and the carbon-based base plate 905 of the channel structure 902 are laid in the named order from the inflow pipe 22 toward the outflow pipe 23. One surface of the carbon-based base plate 705 faces the inflow pipe 22, the other surface of the carbon-based base plate 905 faces the outflow pipe 23, and the base plates 705, 805 and 905 face one another in parallel to one another. The carbon-based base plate 705 separates the inner space of the reactor main body 21 into an area 25 on the inflow pipe 22 side and an area 26 between the carbon-based base plate 705 and the carbon-based base plate 805, the carbon-based base plate 805 separates the inner space of the reactor main body 21 into the area 26 and an area 27 between the carbon-based base plate 805 and the carbon-based base plate 905, and the carbon-based base plate 905 separates the inner space of the reactor main body 21 into the area 27 and an area 28 on the outflow pipe 23 side. The air pipe 24 faces the area 27 between the carbon-based base plate 805 and the carbon-based base plate 905.

Opposing two of the four sides of the carbon-based base plate 705 respectively extend out of opposing two sides of the reactor main body 21. A voltage is applied between the extending two sides by the voltage application section 9, causing the carbon-based base plates 705, 805 and 905 to electrically generate heat.

In the reactor 20, with the carbon-based base plates 705, 805 and 905 generating heat, when the fuel pump 4 is activated, the fuel is supplied into the reactor main body 21 from the inflow pipe 22. When the fuel flows toward the area 26 from the area 25 through the through holes 706, the fuel is heated and vaporized. When the vaporized fuel flows toward the area 27 from the area 26 through the through holes 806, hydrogen and a carbon dioxide or the like are produced from the fuel. When the produced mixture flows toward the area 28 from the area 27 through the through holes 906, a carbon oxide is removed from the mixture by oxidization.

As the plural through holes 706, 806 and 906 penetrate the associated carbon-based base plates 705, 805 and 905 in the embodiment, the pressure loss of the fuel flowing in the through holes 706, 806 and 906 becomes smaller. As the through holes 706, 806 and 906 do not wind, particularly, the pressure loss can be reduced. As the conductive carbon-based base plates 705, 805 and 905 self-generate heat with the current/voltage applied, it is unnecessary to provide heaters, electric heating films or the like in the reactor main bodies 701, 801 and 901, thus simplifying the structures of the carburetor 3, the reformer 5 and the CO selective oxidizer 6. As the fuel directly contacts the carbon-based base plates 705, 805 and 905 which self-generate heat, the reaction of the fuel occurs efficiently. What is more, the amount of heat generated from the carbon-based base plates 705, 805 and 905 can be used efficiently in the fuel reaction.

The invention is not limited to the embodiments, but various modifications and design alterations may be made without departing from the scope and spirit of the invention.

Although the fuel pump 4 is the mechanism to feed the liquid fuel to the carburetor 3 and the reactor 20, the fuel may be supplied as droplets to the carburetor 3 and the reactor 20 by the heads (droplet discharge heads) of an ink jet printer. For example, a plurality of droplet discharge heads may be laid out at the inner surface of the top wall of the reactor main body 21, 701 in such a way as to face the through holes 706, so that the droplet discharge heads inject the fuel as droplets toward the through holes 706 to supply the fuel.

Although preparation of the carbon-based base plate has not been discussed in detail in the foregoing description of the embodiment, the carbon-based base plate may be formed by mixing at least one of activated carbon powder and graphite in a binder which does not cause alteration, such as melting, at the temperature of the micro reactor, and then sintering the resultant product.

## Claims

1. A power generator comprising:
a reactor main body (21, 301, 501, 601, 701, 801, 901) having inner space formed therein; and
a base plate (305, 505, 605, 325, 525, 625, 705, 805, 905) which is so intervened as to separate said inner space of said reactor main body (21, 301,501, 601, 701, 801, 901) into two areas and through which a plurality of through holes (306,506,606, 326, 526, 626, 706, 806, 906) are bored in a thicknesswise direction;
**characterized by**
an electric heating film (308, 508, 608, 328, 528, 628, 705, 805, 905) heating said base plate (305, 505, 605, 325, 525, 625, 705, 805, 905) in accordance with a voltage applied, said electric heating film is said base plate (705, 805, 905) or formed on one of two surfaces of said base plate (305,505,605) or formed within base plate (325, 525, 625).

2. The power generator according to claim 1, wherein a surface layer of said base plate (305, 505, 605, 325, 525, 625) is oxidized, including said through holes (306 ,506, 606), and a catalyst (516, 616) is supported on said oxidized surface layer.

3. The power generator according to claim 1, wherein said base plate (325, 525, 625) comprises two metal plates (327, 329, 527, 529, 627, 629) and said electric heating film (328, 528, 628) is sandwiched between said metal layers.

4. The power generator according to claim 1, wherein said through holes (306, 506, 606, 326, 526, 626, 706, 806, 906) are formed in such a way as be in parallel to one another along a lengthwise direction of said base plate (305, 505, 605, 325, 525, 625, 705, 805, 905) and to run straight so as not to wind halfway.

5. The power generator according to claim 1, wherein said base plate (505, 525, 805) is a part of a reformer (5), and said reformer (5) reforms a fuel and supplies said reformed fuel to a fuel cell (7).

6. The power generator according to claim 1, wherein said base plate (305, 325, 705) is a part of a carburetor (3).

7. The power generator according to claim 1, further comprising a fuel cell (7) which generates power with a reformed fuel.

8. The power generator according to claim 7, further comprising a load which operates on power generated by said fuel cell (7).

9. The power generator according to claim 1, wherein said base plate (705,805, 905) has a carbon-based material.

10. The power generator according to claim 1, further comprising a voltage application section (9) which directly applies a voltage to said base plate (705,805,905) to generate heat from said base plate (705,805,905).

11. The power generator according to claim 1, wherein a catalyst component is supported on a surface layer of said base plate (505, 605, 525, 625, 805, 905) including said through holes (506, 606, 526, 626, 806, 906).

12. The power generator according to claim 1, wherein a support film is formed on a surface layer of said base plate (505, 605, 525, 625, 805, 905) including said through holes (506, 606, 526, 626, 806, 906), and a catalyst component is supported on said support film.

13. The power generator according to claim 1, further comprising a voltage application section (9) which applies a voltage to said electric heating film (308, 508, 608, 328, 528, 628) to generate heat from said base plate (305, 505, 605, 325, 525, 625).

## Patentansprüche

1. Energieerzeuger umfassend:
einen Reaktorhauptkörper (21, 301, 501, 601, 701, 801, 901) mit einem darin ausgebildeten Innenraum, und
eine Grundplatte (305, 505, 605, 325, 525, 625, 705, 805, 905), die so angebracht ist, dass sie den Innenraum des Reaktorhauptkörpers (21, 301, 501, 601, 701, 801, 901) in zwei Bereiche unterteilt, und durch die eine Mehrzahl durchgehender Löcher (306, 506, 606, 326, 526, 626, 706, 806, 906) in Richtung der Plattendicke gebohrt sind;
**gekennzeichnet durch**
einen elektrischen Heizfilm (308, 508, 608, 328, 528, 628, 705, 805, 905), der die Grundplatte (305, 505, 605, 325, 525, 625, 705, 805, 905) gemäß einer angelegten Spannung heizt, wobei der elektrische Heizfilm die Grundplatte (705, 805, 905) ist oder auf einer der beiden Oberflächen der Grundplatte (305, 505, 605) oder innerhalb der Grundplatte (325, 525, 625) ausgebildet ist.

2. Energieerzeuger nach Anspruch 1, wobei eine Oberflächenschicht der Grundplatte (305, 505, 605, 325, 525, 625) einschließlich der durchgehenden Löcher (306, 506, 606) oxidiert ist und ein Katalysator (516, 616) auf der Oberflächenschicht angebracht ist.

3. Energieerzeuger nach Anspruch 1, wobei die Grundplatte (325, 525, 625) zwei Metallplatten (327, 329, 527,529, 627, 629) und den elektrische Heizfilm (328, 528, 628), der zwischen den Metallplatten eingeschlossen ist, umfasst.

4. Energieerzeuger nach Anspruch 1, wobei die durchgehenden Löcher (306, 506, 606, 326, 526, 626, 706, 806, 906) so ausgestaltet sind, dass sie entlang einer Längsrichtung der Grundplatte (305, 505, 605, 325, 525, 625, 705, 805, 905) zueinander parallel sind und gerade verlaufen, ohne sich dazwischen zu verwinden.

5. Energieerzeuger nach Anspruch 1, wobei die Grundplatte (505, 525,805) Teil eines Umformers (5) ist, und der Umformer (5) einen Treibstoff umgeformt und den umgeformt in Treibstoff einer Brennstoffzelle (7) zuführt.

6. Energieerzeuger nach Anspruch 1, wobei die Grundplatte (305, 325, 705) Teil eines Verdampfers (3) ist.

7. Energieerzeuger nach Anspruch 1, der ferner eine Brennstoffzelle (7) umfasst, die mit umgeformten Treibstoff Energie erzeugt.

8. Energieerzeuger nach Anspruch 7, der ferner eine Last umfasst, die mit der Energie aus der Brennstoffzelle (7) betrieben wird.

9. Energieerzeuger nach Anspruch 1, wobei die Grundplatte (705, 805, 905) ein kohlenstoffhaltiges Material enthält.

10. Energieerzeuger nach Anspruch 1, der ferner einen Abschnitt (9) zum Anlegen einer Spannung enthält, der eine Spannung direkt an die Grundplatte (705, 805, 905) angelegt, um durch die Grundplatte (705, 805, 905) Wärme zu erzeugen.

11. Energieerzeuger nach Anspruch 1, wobei eine Katalysatorkomponente auf der Oberflächenschicht der Grundplatte (505, 605, 525, 625, 805, 905) mit durchgehenden Löchern (506, 606, 546, 626, 806, 906) vorhanden ist

12. Energieerzeuger nach Anspruch 1, wobei auf einer Oberflächenschicht der Grundplatte (505, 605, 525, 625, 805, 905) mit durchgehenden Löchern (506, 606, 526, 626, 806, 906) ein Auflagefilm angebracht ist, und eine Katalysatorkomponente auf dem Auflagefilm vorhanden ist.

13. Energieerzeuger nach Anspruch 1, der ferner einen Abschnitt (9) zum Anlegen einer Spannung umfasst, der eine Spannung an den elektrischen Heizfilm (308, 508, 608, 328, 528, 628) anlegt, um durch die Grundplatte (305, 505, 605, 325, 525, 625) Wärme zu erzeugen.

## Revendications

1. Générateur d'énergie, comprenant :
un corps principal de réacteur (21, 301, 501, 601, 701, 801, 901) ayant un espace intérieur formé dans celui-ci ; et
une plaque de base (305, 505, 605, 325, 525, 625, 705, 805, 905) qui est interposée de façon à séparer ledit espace intérieur dudit corps principal de réacteur (21, 301, 501, 601, 701, 801, 901) en deux zones et à travers laquelle une pluralité de trous traversants (306, 506, 606, 326, 526, 626, 706, 806, 906) est percée dans le sens de la largeur ;
**caractérisé par**
un film chauffant électrique (308, 508, 608, 328, 528, 628, 705, 805, 905) chauffant ladite plaque de base (305, 505, 605, 325, 525, 625, 705, 805, 905) selon une tension appliquée, ledit film chauffant électrique étant ladite plaque de base (705, 805, 905) ou formé sur l'une des deux surfaces de ladite plaque de base (305, 505, 605) ou formé à l'intérieur de la plaque de base (325, 525, 625).

2. Générateur d'énergie selon la revendication 1, dans lequel une couche de surface de ladite plaque de base (305, 505, 605, 325, 525, 625) est oxydée, comprenant lesdits trous traversants (306, 506, 606) et un catalyseur (516, 616) est supporté sur ladite couche de surface oxydée.

3. Générateur d'énergie selon la revendication 1, dans lequel ladite plaque de base (325, 525, 625) comprend deux plaques métalliques (327, 329, 527, 529, 627, 629) et ledit film chauffant électrique (328, 528, 628) est intercalé entre lesdites couches métalliques.

4. Générateur d'énergie selon la revendication 1, dans lequel lesdits trous traversants (306, 506, 606, 326, 526, 626, 706, 806, 906) sont formés de façon à être parallèles les uns aux autres dans le sens de la longueur de ladite plaque de base (305, 505, 605, 325, 525, 625, 705, 805, 905) et à s'étendre droit pour ne pas se gauchir à mi-chemin.

5. Générateur d'énergie selon la revendication 1, dans lequel ladite plaque de base (505, 525, 805) fait partie d'un reformeur (5), et ledit reformeur (5) reforme un combustible et fournit ledit combustible reformé à une pile à combustible (7).

6. Générateur d'énergie selon la revendication 1, dans lequel ladite plaque de base (305, 325, 705) fait partie d'un carburateur (3).

7. Générateur d'énergie selon la revendication 1, comprenant en outre une pile à combustible (7) qui génère de l'énergie avec un combustible reformé.

8. Générateur d'énergie selon la revendication 7, comprenant en outre une charge qui fonctionne avec l'énergie générée par ladite pile à combustible (7).

9. Générateur d'énergie selon la revendication 1, dans lequel ladite plaque de base (705, 805, 905) comporte un matériau à base de carbone.

10. Générateur d'énergie selon la revendication 1, comprenant en outre une section d'application de tension (9) qui applique directement une tension à ladite plaque de base (705, 805, 905) pour générer de la chaleur à partir de ladite plaque de base (705, 805, 905).

11. Générateur d'énergie selon la revendication 1, dans lequel un composant catalyseur est supporté sur une couche de surface de ladite plaque de base (505, 605, 525, 625, 805, 905) comprenant lesdits trous traversants (506, 606, 526, 626, 806, 906).

12. Générateur d'énergie selon la revendication 1, dans lequel un film de support est formé sur une couche de surface de ladite plaque de base (505, 605, 525, 625, 805, 905) comprenant lesdits trous traversants (506, 606, 526, 626, 806, 906) et un composant catalyseur est supporté sur ledit film de support.

13. Générateur d'énergie selon la revendication 1, comprenant en outre une section d'application de tension (9) qui applique une tension audit film chauffant électrique (308, 508, 608, 328, 528, 628) pour générer de la chaleur à partir de ladite plaque de base (305, 505, 605, 325, 525, 625).
